# EUROPEAN PATENT SPECIFICATION

(11) **EP 2 253 083 B1**
(45) Date of publication and mention of the grant of the patent: **25.05.2016**
(21) Application number: 08807608.8
(22) Date of filing: 11.09.2008
(51) Int. Cl.: H04B 13/00, H04W 28/18

(54) **SKIN-BASED INFORMATION TRANSFER BETWEEN MOBILE DEVICES**
INFORMATIONSTRANSFER ÜBER DIE HAUT ZWISCHEN MOBILGERÄTEN
TRANSFERT D'INFORMATIONS FONDÉ SUR LA PEAU ENTRE DISPOSITIFS MOBILES

(30) Priority: 13.03.2008 US 47744
(43) Date of publication of application: 24.11.2010
(73) Proprietor: Sony Ericsson Mobile Communications AB, 221 88 Lund (SE)
(72) Inventor: ANDERSSON, Marcus, SE-221 88 Lund (SE); ÅKESSON, Per Linus Benjamin, SE-224 72 Lund (SE); ÖSTERGREN, Mattias, SE-224 71 Lund (SE)
(74) Representative: Valea AB
(86) International application number: PCT/IB2008/053673
(87) International publication number: WO 2009/112897

(56) References cited:
- EP-A- 1 024 626
- EP-A- 1 102 215
- EP-A- 1 220 501
- WO-A-2007/096810
- WO-A-2007/129237
- ZIMMERMAN T G: "PERSONAL AREA NETWORKS: NEAR-FIELD INTRABODY COMMUNICATION" IBM SYSTEMS JOURNAL, IBM CORP. ARMONK, NEW YORK, US, vol. 35, no. 3/04, 1 January 1996 (1996-01-01), pages 609-617, XP000635090 ISSN: 0018-8670

## Description

### BACKGROUND

The popularity and use of mobile terminals and mobile telephones has skyrocketed over the past 20 years. In social circumstances, it has become increasingly common to exchange contact or other types of information by inputting the information into the mobile device's address book or contact management tool. Although practical in some circumstances, in situations where meetings are brief or time does not allow the questions and answers required for manual inputting of contact information, mobile devices may be used to transmit the information via a wireless network, such as a infrared or Bluetooth® network. Unfortunately, this process still requires users to manually interface with their mobile devices in order to setup, enable, or authorize the connection.

### SUMMARY

According to one aspect, a method, performed by a first mobile terminal may include transmitting a wireless network setup message to a second mobile terminal via a skin-based communication network; enabling a wireless network connection based on information included in the wireless network setup message; and receiving a data item from the second mobile terminal via the wireless network connection.

Additionally, the data item may include at least one item of contact information associated with a user of the second mobile terminal.

Additionally, the method may further include identifying a skin domain connection opportunity; and transmitting the wireless network setup message to the second mobile terminal following identification of the skin domain connection opportunity.

Additionally, identifying the skin domain connection opportunity may include monitoring a parameter associated with a skin domain associated with a user of the first mobile device.

Additionally, monitoring the parameter may include monitoring one of a capacitance or an inductance via a skin domain interface device.

Additionally, the skin domain interface device may include a conductive tether or strap.

Additionally, the skin domain interface device may include a conductive fabric positioned between the skin domain and the first mobile device.

Additionally, the method may include transmitting a connection request signal to the second mobile terminal following identification of the skin domain connection opportunity; determining whether the connection request signal was successful transmitted; and transmitting the wireless network setup message to the second mobile terminal when it is determined that the connection request signal was successfully transmitted.

Additionally, determining whether the connection request signal was successful transmitted may further include determining whether a connection request acknowledgement signal is received from the second mobile terminal.

Additionally, the method may further include retransmitting the connection request signal to the second mobile terminal when it is determined that the connection request signal was not successfully transmitted.

Additionally, the method may include delaying retransmitting the connection request signal to the second mobile terminal for a random or pseudo-random time period.

Additionally, the method may further include determining whether the received data item matches a contact stored in the first mobile terminal; and storing a new contact including at least some of the received data in the first mobile terminal when it is determined that the received data does not match a contact stored in the first mobile terminal.

Additionally, the method may further include updating at least some contact information based on the received data, when it is determined that the received data item matches a contact stored in the first mobile terminal.

Additionally, updating at least some contact information may further include updating a date last met field associated with the contact.

Additionally, the method may include audibly outputting a name associated with the contact when it is determined that the received data item matches a contact stored in the first mobile terminal.

Additionally, audibly outputting the name associated with the contact may include audibly outputting the name via a handsfree audio device associated with the first mobile terminal.

According to another aspect, a mobile terminal may include communication logic to transmit a wireless setup message to a second mobile terminal via a skin domain communication network; and wireless logic to: establish a wireless connection with the second mobile terminal based on information included in the wireless network setup message, and automatically receive one or more data items from the second mobile terminal via the wireless connection.

Additionally, the communication logic may be further configured to identify a change in a parameter associated with skin of a user of the mobile terminal, the change corresponding to a skin domain connection opportunity; and transmit the wireless setup message to the second mobile terminal based on the identified change.

According to yet another aspect, a method may include determining a capacitance associated with a skin domain; identifying a connection opportunity based on the determined capacitance; transmitting a wireless network setup message upon identification of the connection opportunity; activating wireless logic based on information contained in the wireless network setup message; establishing a wireless connection based on information contained in the wireless network setup message; and receiving contact information associated with a user of a second mobile terminal via the wireless connection.

Additionally, the contact information may include an encryption key associated with the user of the second mobile terminal. A skin based communication network according to the state of the art is known from EP-A-1220501.

### BRIEF DESCRIPTION OF THE DRAWINGS

The accompanying drawings, which are incorporated in and constitute a part of this specification, illustrate an embodiment of the invention and, together with the description, explain the invention. In the drawings,
Fig. 1 is a diagram of an exemplary system in which systems and methods consistent with the invention may be implemented;
Fig. 2 is an exemplary diagram of a mobile terminal of Fig. 1;
Fig. 3 is a flowchart of exemplary processing for establishing the skin-based communication network of Fig. 1;
Fig. 4 is a flowchart of additional exemplary processing for establishing the skin-based communication network of Fig. 1;
Fig. 5 is a flowchart of exemplary processing for handling information received via the wireless network of Fig. 1;
Fig. 6 is a diagram of a user interface or display illustrating a social network based on physical meetings; and
Fig. 7 is an exemplary diagram of the processing described with respect to Figs. 3 and 4.

### DETAILED DESCRIPTION

The following detailed description of the invention refers to the accompanying drawings. The same reference numbers in different drawings may identify the same or similar elements. Also, the following detailed description does not limit the invention.

Implementations consistent with the principles of the invention may provide for transmission of wireless network setup information between mobile terminals using a skin-based communication network. The wireless network setup information may be used to establish a wireless connection between the two terminals.

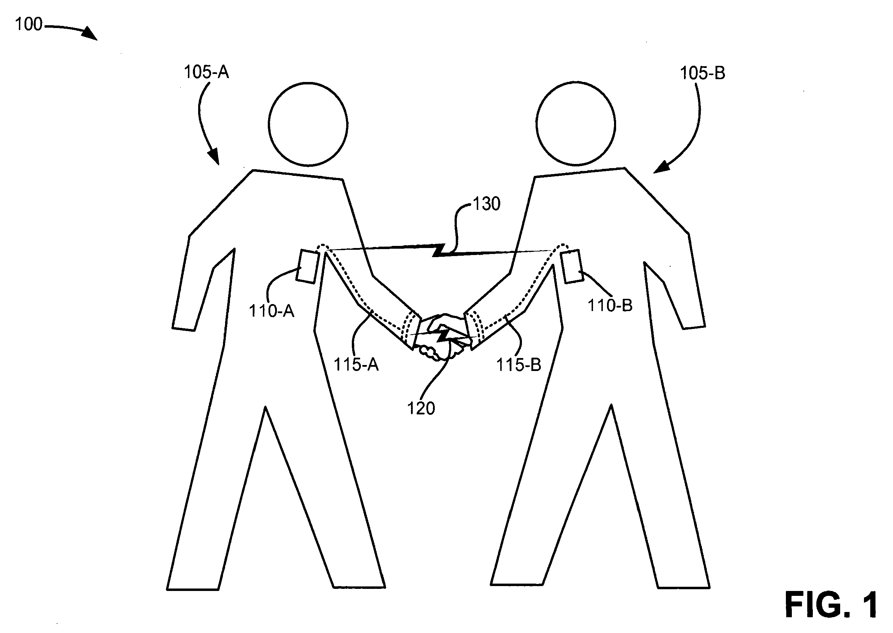

Fig. 1 is a diagram of an exemplary system 100 in which systems and methods consistent with the invention may be implemented. The invention is described herein in the context of mobile terminals. As used herein, the term "mobile terminal" may include a cellular radiotelephone with or without a multi-line display; a Personal Communications System (PCS) terminal that may combine a cellular radiotelephone with data processing, facsimile and data communications capabilities; a personal digital assistant (PDA) that can include a radiotelephone, pager, Internet/Intranet access, Web browser, organizer, calendar and/or a global positioning system (GPS) receiver; and a conventional laptop and/or palmtop receiver or other appliance that includes a radiotelephone transceiver. Mobile terminals may also be referred to as "pervasive computing" devices. Mobile terminals may also optionally include a camera. Moreover, mobile terminals may include a wide variety of form factors including, candy bar, clamshell, flip, slider, and swivel or pivot style. It should be understood that the principles of the invention may applied to mobile terminals regardless of form factor.

As illustrated in Fig. 1, system 100 may include user 105-A and 105-B, referred to collectively as "users 105", mobile terminals 110-A and 110-B, referred to collectively as "mobile terminals 110", and skin domain interface devices 115-A and 115-B, referred to collectively as "skin domain interface devices 115." The number of users, mobile terminals, and skin domain interface devices illustrated in Fig. 1 is provided for simplicity. In practice, a typical system may include more users, mobile terminals, and skin domain interface devices than illustrated in Fig. 1.

In accordance with one implementation consistent with aspects described herein, mobile terminals 110 may communicate and/or exchange data with each other via a skin-based communication network 120 formed using skin domain interface devices 115. Each skin domain interface device 115 may form a conductive connection between a respective mobile terminal 110 and a user 105's skin, such that signals may be transmitted from mobile terminal 110 and across the user 105's skin. In this manner, all or part of a user's skin may form a "skin domain" for providing a physical interface to the mobile terminal 110. Accordingly, skin-to-skin contact between users may enable exchange of data or electrical signals between corresponding mobile terminals 110, via skin domain interface devices 115.

For example, skin domain interface devices 115 may, in one implementation, include conductive tether straps wrapped around a user's appendage (e.g., an arm or leg) or torso. Alternatively, skin domain interface devices 115 may include clothing having one or more layers of conductive fabric positioned between a mobile terminal 110 and the user's skin.

In some implementations, an initial communication via skin domain communication network 120 may be used to initialize or establish additional communication between mobile terminals 110 via a short-range wireless network 130, such as a Bluetooth®-based network, a near field communication (NFC) protocol network, or an IEEE 802.1 1x-based network. Network 130 may sometimes be referred to as a personal area network (PAN). Mobile terminals 110 may also communicate using longer range wireless networks, such as cellular telephone networks, WiMax networks, etc.

As will be described in additional detail below, skin-based communication network 120 may be used to initiate the exchange or updating of identification or personal information, support various automated recognition and authentication systems, and provide a basis for a personal interaction based social network.

### EXEMPLARY MOBILE TERMINAL CONFIGURATION

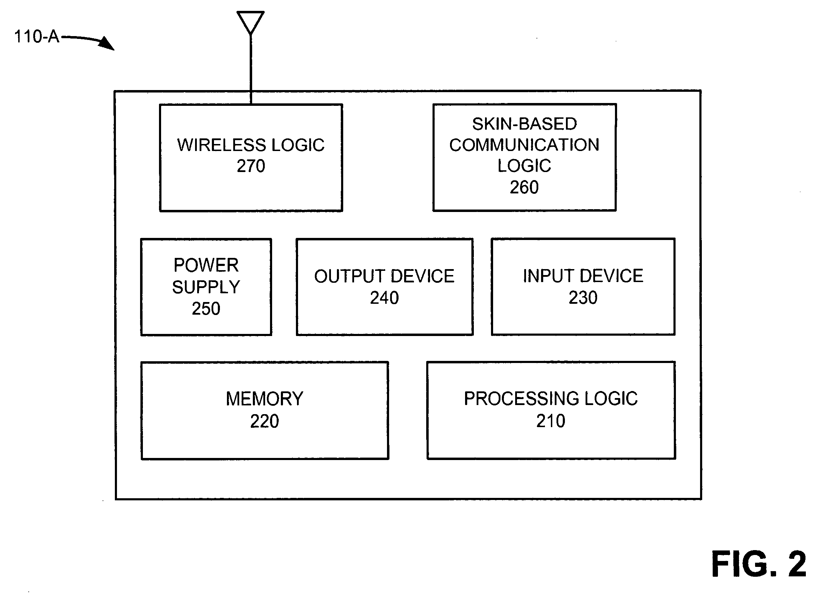

Fig. 2 is a diagram illustrating some components of mobile terminals 110 according to an exemplary implementation consistent with the described embodiments. Mobile terminal 110 may include processing logic 210, a memory 220, an input device 230, an output device 240, a power supply 250, skin-based communication logic 260, wireless logic 270, and antenna 280. One skilled in the art would recognize that the mobile terminal 100 may be configured in a number of other ways and may include other or different elements, such as one or more additional radio frequency (RF) antennas, a transceiver, modulator/demodulator, encoder/decoder, a speaker, etc.

Processing logic 210 may include a processor, microprocessor, an application specific integrated circuit (ASIC), field programmable gate array (FPGA) or the like. Processing logic 210 may execute software programs or data structures to control operation of mobile terminal 110. Memory 220 may include a random access memory (RAM) or another type of dynamic storage device that stores information and instructions for execution by processing logic 210; a read only memory (ROM) or another type of static storage device that stores static information and instructions for use by processing logic 210; and/or some other type of magnetic or optical recording medium and its corresponding drive. Instructions used by processing logic 210 may also, or alternatively, be stored in another type of computer-readable medium accessible by processing logic 210. A computer-readable medium may include one or more memory devices. In addition, memory 220 may include a storage device for storing data in one or more databases or other data structures. The stored data may include, for example, executable applications, media files, personal information (e.g., address book information, etc.), preference data, user settings or configuration files, etc.

Input device 230 may include any mechanism that permits an operator to input information to mobile terminal 110, such as a microphone (e.g., microphone 135), a keyboard, a keypad (e.g., keypad 120 and control keys 125), a mouse, a pen, stylus, touch screen display, voice recognition and/or biometric mechanisms, etc. Input device 230 may also include one or more buttons that allows a user to receive a menu of options associated with, for example, skin-based communication logic 260 and/or wireless logic 270.

Output device 240 may include hardware and/or software components to output information to the user, such as a display, a printer, a speaker, etc. For example, output device 240 may include one or more displays to facilitate the display of various types of information to a user including, for example, telephone call information, phone or address book information, etc. Additionally, output device 240 may provide one or more high resolution interfaces for viewing interactive menus, web browsers, photographs, etc.

Power supply 250 may supply power to components of mobile terminal 110, such as output devices 240, input device 230, etc.

Skin-based communication logic 260 may include a transceiver device capable of transmitting and receiving data and control signals to and from skin domain interface device 115 using a low or weak electrical current. As will be described in additional detail below, currents on the order of, for example, 10-40 nanoamperes may be used to transmit signals to and from skin domain interface device 115, although other suitable currents may also be used. In implementations using conductive fabrics as skin domain interface device 115, the weak currents may be transmitted via a conductive outer housing of mobile terminals 110. In implementations using wire or strap based skin domain interface device 115, the weak currents may be transmitted via an output jack connected to a corresponding input jack on skin domain interface device 115.

Wireless logic 270 may include a transceiver device capable of transmitting and receiving data and control signals using a short distance wireless communication protocol. The short distance wireless communication protocol may include, for example, the Bluetooth protocol, the NFC protocol, the IEEE 802.11 protocol, or any other short distance wireless communication protocol. Antenna 280 may include, for example, one or more directional antennas and/or omni directional antennas associated with wireless logic 270.

In one embodiment, mobile terminals 110, may perform processing associated with, for example, establishing a connection to at least one other mobile terminal 110 using skin-based communication network 120. Mobile terminal 100 may perform these operations in response to processing logic 210 executing sequences of instructions contained in a computer-readable medium, such as memory 220 and optionally in response to user interaction through input device 230. It should be understood that a computer-readable medium may include one or more memory devices. Execution of sequences of instructions contained in memory 220 causes processing logic 210 and/or input device 230 to perform operations that will be described hereafter. As described below, hard-wired circuitry may be used instead of, or in combination with, software instructions to implement processes consistent with embodiments described herein. Thus, implementations consistent with embodiments described herein are not limited to any specific combination of hardware circuitry and software.

### EXEMPLARY PROCESSING

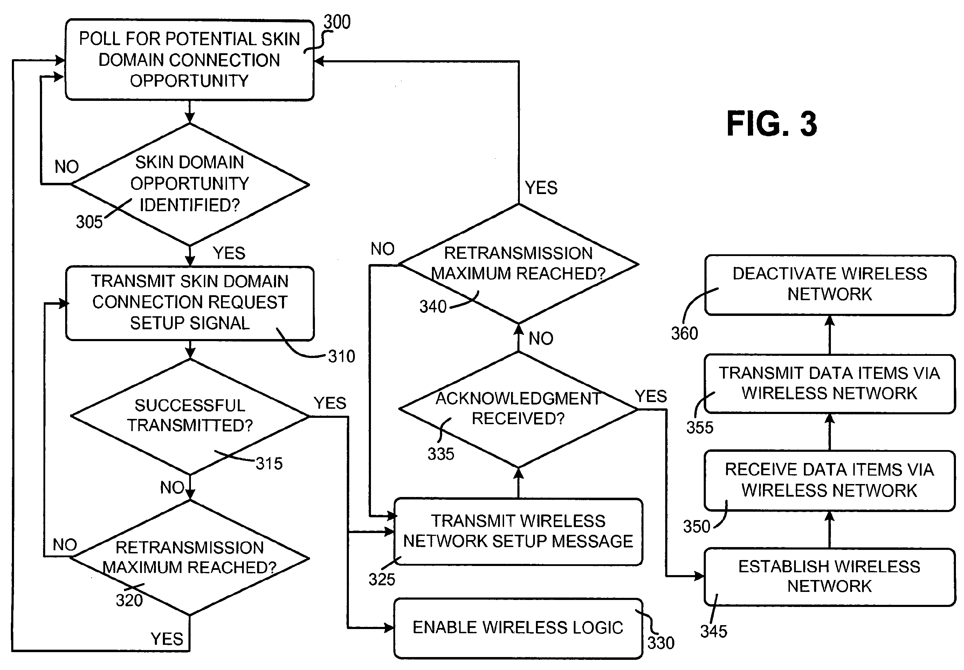

Fig. 3 is a flowchart of exemplary processing for establishing skin-based communication network 120 in an implementation consistent with the embodiments described herein. It will be assumed for this process that users 105 have enabled mobile terminals 110, e.g., via input device 230, to initiate and/or receive skin-based connection requests and to establish a wireless network connection upon successful establishment of a skin-based connection. Alternatively, mobile terminals 110 may be pre-configured to allow or enable automatic initiation and establishment of skin-based connections.

Processing may begin with mobile terminal 110-A polling for a potential skin domain connection opportunity (block 300). In one implementation, mobile terminal 110-A may poll for potential skin domain connection opportunities by monitoring a change in capacitance across the user's skin domain, by, for example, monitoring a change in capacitance resulting from current flow through skin domain interface device 115-A. In other implementations, other characteristics, such as inductance, resistance, etc. may be monitored to determine potential skin domain connection opportunities.

When a user 105-A's skin domain is in contact with user 105-B's skin domain, such as, for example, during a handshake, the capacitance (or other characteristic, e.g., inductance, resistance, etc.) monitored by mobile terminal 110-A via skin domain interface device 115-A (as well as that monitored by mobile terminal 110-B) may change by a predetermined amount (or within a predetermined range), resulting in a perceived skin domain connection opportunity. By identifying capacitance changes corresponding to skin-to-skin contact (as opposed to skin-to-other materials contact), possible skin domain connection opportunities may be accurately identified.

In one implementation, in order to avoid possible conflicts in establishing skin-based communication network 120, mobile terminal 110-A may monitor the capacitance and/or inductance, resistance, etc. across skin domain interface device 115-A at substantially random or pseudo-random intervals. For example, mobile terminal 110-A may monitor the capacitance across skin domain interface device 115-A at pseudo-random intervals in a range of about every 2 to 4 milliseconds. Other intervals may be used in various implementations.

Following polling, it may be determined whether a possible skin domain connection opportunity has been identified (e.g., by measuring a predetermined change in capacitance associated with user 105-A's skin domain) (block 305). When a skin domain connection opportunity has not been identified (e.g., no suitable change in capacitance is measured) (block 305-NO), processing may return to block 300 for a next polling cycle. However, when a skin domain connection opportunity has been identified (block 305-YES), a skin domain connection request setup signal may be transmitted across user 105-A's skin domain, e.g., via skin domain interface device 115-A (block 310).

In one implementation consistent with embodiments described herein, the skin domain connection request setup signal may include a predetermined bit sequence that may indicate to a receiving mobile terminal (e.g., skin based communication logic 260 of mobile terminal 110-B) that a mobile terminal wishes to exchange data therewith. For example, the skin domain connection request setup signal may include an alternating sequence of logical 1's and 0's transmitted using alternating bearer frequencies. In one implementation, signals of 30 kHz and 40 kHz may be used for 0's and 1's, respectively.

Because the skin domain created between two users (e.g., users 105-A and 105-B) is not a dedicated transmission media, it may be possible that mobile terminal 110-A may be attempting to transmit a skin domain connection request setup signal to user device 110-B at a same time that mobile terminal 110-B is attempting to transmit a skin domain connection request setup signal to mobile terminal 110-A. Given that each mobile terminal may be transmitting using identical or similar frequencies, collisions may occur that prevent reception of a skin domain connection request setup signal at either mobile terminal 110.

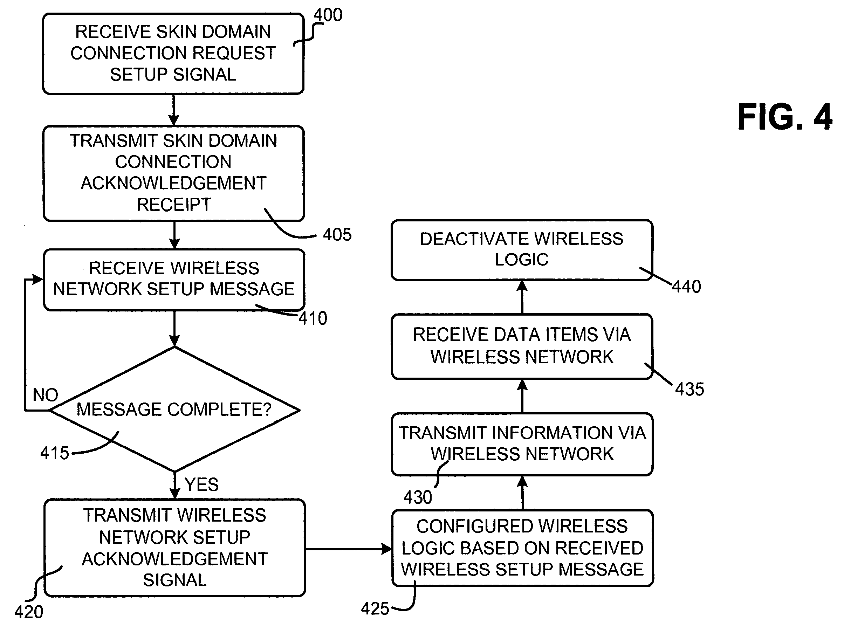

To protect against this possibility, as well as the possibility that user 105-A is either not contacting a human, or is not contacting a human having a receptive mobile terminal, mobile terminal 110-A may determine whether the skin domain connection request setup signal was successfully transmitted (block 315). In one implementation, mobile terminal 110-A may determine whether a collision has occurred by monitoring a current across the user 105-A's skin domain. In another implementation, mobile terminal 110-A may determine that a collision has occurred or that the skin domain connection request setup signal has not been successful transmitted when an acknowledgement signal is not received from mobile terminal 110-B. As will be described below, in relation to Fig. 4, mobile terminal 110-B may, upon receipt of a recognized skin domain connection request setup signal, transmit a skin domain acknowledgment signal to mobile terminal 110-A. As with the skin domain connection request setup signal, the skin domain acknowledgment signal may include a predefined bit sequence that indicates to mobile terminal 110-A, that mobile terminal 110-B is ready to establish skin domain communication network 120.

In one implementation, when a collision or failure to receive a skin domain acknowledgment signal is determined (block 315-NO), mobile terminal 110-A may determine whether a retransmission maximum has been reached (block 320). For example, mobile terminal 110-A may determine whether the skin domain connection request setup signal has already been transmitted a predetermined number of times within an identified skin domain connection opportunity (i.e., the retransmission maximum). Such a threshold limits expenditure of energy in emitting the skin domain connection request setup signal in instances where 1) a person with whom user 105-A is shaking hands is not connected to a suitable mobile terminal 110-B; or 2) user 105-A is in skin contact with an entity that causes a similar change in capacitance as another human, but that is not, in fact, a human (such as an animal, etc.).

When it is determined that the retransmission maximum has not been reached (block 320-NO), a retransmission counter may (e.g., stored in memory 220) may be incremented by 1 and processing may return to bock 315 for retransmission of the skin domain connection request setup signal. In some implementations, a content of the skin domain connection request setup signal may be altered upon successive retransmissions so as to increase the likelihood that a collision does not occur. For example, a bit length or transmission frequency of the skin domain connection request setup signal may be modified upon success retransmissions. In yet other implementations, retransmission of the skin domain connection request setup signal may be delayed by a pseudo-random delay, thereby avoiding the occurrence of mobile terminal 110-B attempting to transmit a skin domain connection request setup signal at a same time. In some implementations, delays on the order of approximately 5-10 ms may be suitable to avoid collisions in such circumstances.

When it is determined that the retransmission maximum has been reached (block 320-YES), processing may return to block 300 for a next polling cycle. In some implementations consistent with aspects described herein, a polling cycle may be delayed for a predetermined period of time (e.g., on the order of seconds to minutes) to avoid continued attempts to connect to unresponsive or nonexistent mobile terminals.

Returning to block 315, when it is determined that the skin domain connection request setup signal was successfully transmitted (i.e., no collision and/or acknowledgement signal received) (block 315-YES), it may be determined that skin domain communication network 120 has been successfully established and mobile terminal 110-A may transmit a wireless network setup message to mobile terminal 110-B via skin domain communication network 120 (block 325).

In one implementation consistent with aspects described herein, the wireless network setup message may include configuration settings for enabling mobile terminal 110-B to connect to mobile terminal 110-A, and to transfer data to mobile terminal 110-A via wireless network 130. For example, suitable configuration settings may include Bluetooth® configuration settings that include, for example, pairing information necessary for enabling mobile terminals 110-A and 110-B to exchange information via the Bluetooth® wireless protocol. In an alternative embodiment, wireless network setup message may include an ad hoc network identifier (e.g., a service set identifier (SSID)) and shared repository location associated with an ad hoc wireless network provided by wireless logic 270. In some implementations, wireless network setup message may include one or more packets or other data units configured to include the wireless network configuration settings.

Upon receipt of this information, mobile terminal 110-B may connect to the identified ad hoc wireless network and send data to the designated repository. In yet another alternative implementation, the wireless network setup message may include configuration settings for enabling mobile terminal 110-A to connect to mobile terminal 110-B, and to request data from mobile terminal 110-B via wireless network 130.

In addition, skin-based communication logic 260 may enable wireless logic 270 to accept or initiate wireless network 130 with mobile terminal 110-B (block 330). In some implementations, the processing of block 330 may be performed before or substantially simultaneously with the transmission of the wireless network setup message via skin domain communication network 120. Further, in some implementations, wireless logic 270 may be previously enabled or activated, while in other implementations, wireless logic 270 may be activated upon receipt of an activation signal from skin-based communication logic 260.

For example, in a Bluetooth® -based embodiment, skin-based communication logic 260, upon determination of a successful skin domain communication network 120, may activate Bluetooth® wireless logic 270 and may instruct Bluetooth® wireless logic 270 to pair with mobile device 110-B using a designated pairing code. This may enable wireless logic 270 to pair with suitable wireless logic 270 in mobile terminal 110-B to exchange information without requiring input from either user 105-A or user 105-B.

To protect against possible data loss or collisions, the wireless network setup message may include a checksum or other error correction element for enabling a receiving mobile terminal (e.g., mobile terminal 110-B) to determine the completeness of the wireless network setup message.

Following transmission of the wireless network setup message, mobile terminal 110-A may determine whether a wireless network setup acknowledgement receipt has been received from mobile terminal 110-B (block 335). As described above in relation to the skin domain acknowledgment signal, the wireless network setup acknowledgement signal may include a predefined bit sequence that indicates to mobile terminal 110-A, that mobile terminal 110-B has properly received the wireless network setup message. In one implementation, mobile terminal 110-B may transmit a retransmission request to mobile terminal 110-A, in the event that a partial wireless network setup message was received.

When it is determined that the wireless network setup acknowledgement signal has not been received (block 335-NO), mobile terminal 110-A may determine whether a wireless network setup message retransmission maximum has been reached (block 340). For example, mobile terminal 110-A may determine whether the wireless network setup message has already been transmitted a predetermined number of times within an identified skin domain connection opportunity (i.e., the wireless network setup message retransmission maximum). Such a threshold limits expenditure of energy in emitting the wireless network setup message in instances where 1) mobile terminal 110-B is not configured to receive the message; or 2) interference of other factors are preventing proper transmission of the wireless network setup message.

When it is determined that the wireless network setup message retransmission maximum has been reached (block 340-YES), processing may return to block 300 for a next polling cycle.

When it is determined that the wireless network setup message retransmission maximum has not been reached (block 340-NO), a wireless network setup message retransmission counter may (e.g., stored in memory 220) may be incremented by one and processing may return to bock 325 for retransmission of the wireless network setup message. In some implementations, retransmission of the wireless network setup message may be delayed by a pseudo-random delay, thereby avoiding the occurrence of collisions with outbound signals from mobile terminal 110-B. In some implementations, delays on the order of approximately 5-10 ms may be suitable to avoid collisions in such circumstances.

Returning to block 335, when it is determined that the wireless network setup acknowledgement signal has been received (block 335-YES), mobile terminal 110-A may establish wireless network 130 with mobile terminal 110-B (block 345). For example, in one implementation, wireless logic 270 of mobile terminal 110-A (activated in the manner described above) may receive a connection request from mobile terminal 110-B, the connection relating to receiving personal information associated with user 105-B. Alternatively, wireless logic 270 may initially receive a pairing request from mobile terminal 110-B based on the transmitted wireless configuration setup message.

Upon establishment of wireless network 130, mobile terminal 110-A may receive one or more items of data from mobile terminal 110-B via wireless network 130 (block 350). For example, mobile terminal 110-A may receive identification information corresponding to user 105-B, such as information contained in a v-card associated with mobile terminal 110-B. A v-card is a standardized electronic business card format usable by a variety of address book and contact management applications. In one implementation, information contained in the v-card may be formatted as a comma-delimited data file, where text values associated with the different data elements are provided in a list separated by commas. Depending on a location of a data element in the listing, a type of data associated with each element may be identified. For example, a data file "Doe, John, 5715550123, 7035557123, ,1234 Anywhere Drive, Fairfax, VA, 22030" may correspond to data types "last name, first name, work phone, home phone, mobile phone, work street, work city, work state, work zip). Note that because a mobile number is not provided the data presented may be provided with a blank space in that position, to ensure that receiving terminal is able to accurately identify all elements of received data. In an alternative embodiment, the transmitted data may be provided in a format, such as extensible markup language (XML), in which elements of information are provided with metadata that indicates the types of information being provided.

Additional types of information may also be received, including, for example, a public encryption key associated with user 105-B. Upon receipt of such a public encryption key, subsequent messages or information received from user 105-B and encrypted using user 105-B's private encryption key may be decrypted and/or authenticated as coming from user 105-B based on the received public encryption key. Consistent with embodiments described herein, mobile terminal 110-B may be configured to provide the public encryption key only in response to data exchange initiated via skin domain communication network 120. In this way, user 105-A may be certain, even at a later time, that the public key stored on mobile terminal 105-A originates from a known, original person (e.g., user 105-B).

Substantially simultaneously with the receipt of data in block 350, mobile terminal 110-A may transmit similar information to mobile terminal 110-B via wireless network 130 (block 355). Information to be transmitted may be defined by user 105-A, for example, via input device 230 and may be stored in a data file, for example, in memory 220.

Upon exchange of information, wireless network 130 may be terminated, and depending on settings associated with mobile terminal 110-A, wireless logic 270 may be deactivated (block 360). By establishing and maintaining wireless network 130 only during the time necessary to exchange the desired information, wireless network 130 does not remain open and subject to additional, possibly unwanted, data exchange. Additionally, battery power for mobile terminal 110-A may be maximized by limiting the duration in which wireless logic 270 maintains wireless network 130.

Fig. 4 is a flowchart of exemplary processing for establishing skin-based communication network 120 in an implementation consistent with the embodiments described herein. As with the embodiment of Fig. 3, it will be assumed for this process that users 105 have enabled mobile terminals 110, e.g., via input device 230, to initiate and/or receive skin-based connection requests and to establish a wireless network connection upon successful establishment of a skin-based connection. Alternatively, mobile terminals 110 may be pre-configured to establish communications in response to skin-based connections.

Processing may begin with mobile terminal 110-B receiving a skin domain connection request setup signal from mobile terminal 110-A via skin domain communication network 120 (block 400). In response, mobile terminal 110-B may return a skin domain connection acknowledgement receipt to mobile terminal 110-A via skin domain communication network 120 (block 405).

Mobile terminal 110-B may receive a wireless network setup message from mobile terminal 110-A via skin domain communication network 120 (block 410). As described above, the wireless network setup message may include configuration information relating to the establishment of wireless network 130 using wireless logic 270. As further indicated above, the wireless network setup message may include one or more error correction or data checking elements, such as a checksum to enable mobile terminal 110-B to ensure that an entire wireless network setup message has been received. Mobile terminal 110-B may check the integrity and/or completeness of the received wireless network setup message (block 415). For example, skin-based communication logic 260 may compare the contents of the wireless network setup message with the checksum included in the message.

When it is determined that the received wireless network setup message is not complete and/or contains an error (block 415-NO), mobile terminal 110-B may do nothing and simply return to block 410 to await receipt of the retransmitted wireless network setup message. Alternatively, skin-based communication logic 260 in mobile terminal 110-B may transmit a wireless setup message retransmission request message to mobile terminal 110-A via skin domain communication network 120. As with the other signals/messages transmitted across skin domain communication network 120, the wireless setup message retransmission request may include a predefined bit sequence recognizable by skin-based communication logic 260 of mobile terminal 110-A.

When it is determined that the received wireless network setup message is complete and/or error free (block 415-YES), mobile terminal 110-B may transmit a wireless network setup acknowledgement signal to mobile terminal 110-A via skin domain communication network 120 (block 420). Mobile terminal 110-B may configure wireless logic 270 to establish or connect to wireless network 130 based on the content of the wireless network setup message received in block 410 (block 425). As described above, wireless network 130 may include any of a variety of relatively short distance wireless network formats, such as a Bluetooth® network, a 802.11x wireless LAN, a WiMax network, a near field communication network, etc. Depending on the type of network being used, the wireless network setup message may include different types of information.

In one implementation consistent with aspects described herein, the wireless network setup message may include Bluetooth® pairing information for establishing a Bluetooth® connection with mobile terminal 110-A. In such an implementation, skin-based communication logic 260 of mobile terminal 110-B may send a Bluetooth® activation signal to wireless logic 270 that both activates the wireless logic 270 and provides the pairing information thereto for connecting to mobile terminal 110-A.

Depending on a configuration of mobile terminal 110-B, predetermined types of information may then be automatically transmitted via the wireless network 130 to mobile terminal 110-A (block 430). For example, as described above, personal or contact information, such as v-card information, may be automatically transmitted to mobile terminal 110-A. Designation of the information to be transmitted may be defined by user 105-B, for example, via input device 230 and may be stored in a data file, for example, in memory 220. In addition to contact or v-card information, additional types of data may also be exchanged in block 430. Exemplary data may include pictures, media, encryption/decryption keys, profile information, etc.

Substantially simultaneously with the transmission of information in block 430, mobile terminal 110-B may receive similar information from mobile terminal 110-A via wireless network 130 (block 435). After the exchange of information, wireless network 130 may be terminated, and depending on settings associated with mobile terminal 110-A, wireless logic 270 may be deactivated (block 440).

By enabling the configuration, setup, and exchange of data across a wireless network based upon an initial period of physical contact between the parties exchanging data, efficient exchange of information may be achieved without requiring cumbersome, difficult, or time consuming efforts on the part of either party.

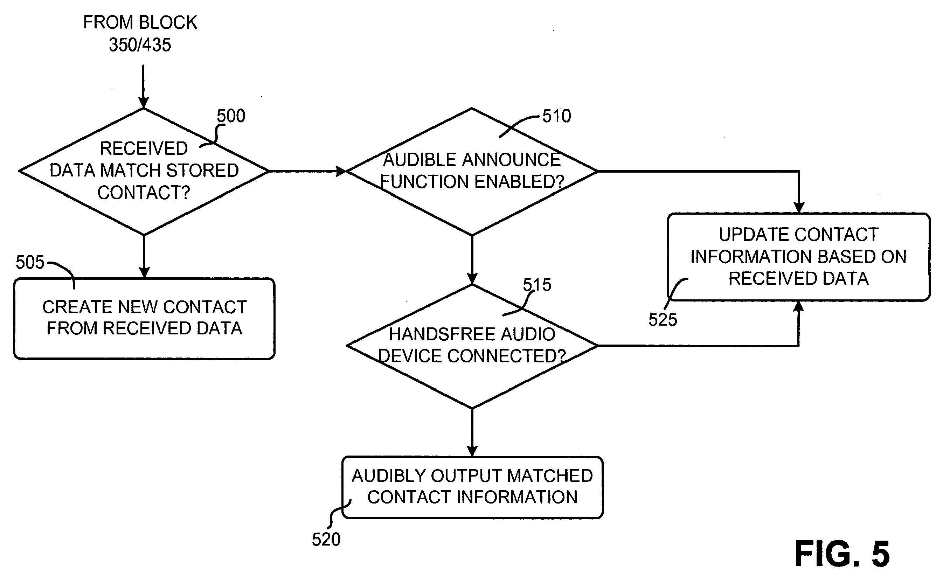

Fig. 5 is a flowchart of exemplary processing for handling information received via wireless network 130 in an implementation consistent with the embodiments described herein. For the purposes of this embodiment, assume that the received data includes personal, contact, or other information identifying a user of mobile terminal 110-B. Processing may begin following receipt of data via wireless network 130, as described above with respect to blocks 350 and 435 of Figs. 3 and 4, respectively.

Upon receipt of the data, mobile terminal 110-A may determine whether the received information at least partially matches a previously stored contact in an address book or other contact listing in mobile terminal 110-A (e.g., stored in memory 220) (block 500). If the received information does not at least partially match a previously stored contact (block 500-NO), a new contact may be created and stored based on the received information (block 505). In accordance with embodiments described herein, mobile terminal 110-A may provide the new contact with a field indicating a date of first meeting associated with the new contact.

As described above, users of mobile terminals 110 may define what types of information are exchanged via skin-contact initiated wireless network 130. Accordingly, the types of information received from individual mobile terminals 110 may differ. The format of the received information may be consistent across all users, however, to assist receiving mobile terminals 110 in identifying the received information.

Returning to block 500, when it is determined that the received information at least partially matches a previously stored contact (block 500-YES), it may be determined whether an audible announce function has been enabled (block 510). If so (block 510-YES), it may be determined whether a handsfree audio device, such as a wired or wireless headset, is activated for mobile terminal 110 (block 515). If a handsfree audio device is activated (block 515-YES) and the audible announce function has been enabled (block 510-YES), information associated with the matched contact may be audibly output via a speaker associated with the handsfree audio device (block 520).

For example, upon shaking the hand of user 105-B, a mobile terminal 110-A may initiate the setup of wireless network 130 and receive contact information from user 105-B. Mobile terminal 110-A may determine that the contact is a known contact and may audibly output information regarding the contact to user 105-A via a handsfree audio device. Output information may include the contact's name, time of last meeting, spouse and/or child information, company name, etc. The provided information may assist the user in remembering information about the person he/she is or had just been shaking hands with. The type of information to be output via the handsfree audio device as well as the order in which it is provided may be configured by user 105-A and may be stored, for example, as a configuration file in memory 220 of mobile terminal 110-A. Processing may then continue to block 525 below.

When it is determined that either a handsfree audio device is not activated (block 515-NO) or the audible announce function has not been enabled (block 510-NO) processing continues to block 525, where information associated with the identified contact may be updated based on predefined rules associated with the address book or contact list. For example, some users may elect to automatically overwrite existing contact information with information received via wireless network 130. Others may elect to maintain dual entries until the user has an opportunity to review the suggested update. By requiring only a partial match to identify existing contacts, mobile terminals 110 may identify contacts that include at least one element of updated information. For example, a user whose work telephone number has changed, may still be matched to the contact associated with the prior number, based on other elements of information, such as name, home number, work address, etc.

While updating the contact in block 510, a time of last meeting field associated with the contact may be updated to reflect the time at which the information was received. This information may be stored in the address book and may be subsequently available for review by the user. Contact or address book information may be synchronized across multiple device in addition to mobile terminal 110. For example, a user may synchronize the address book to one or more personal computers or remote (e.g., web-based) contact management applications.

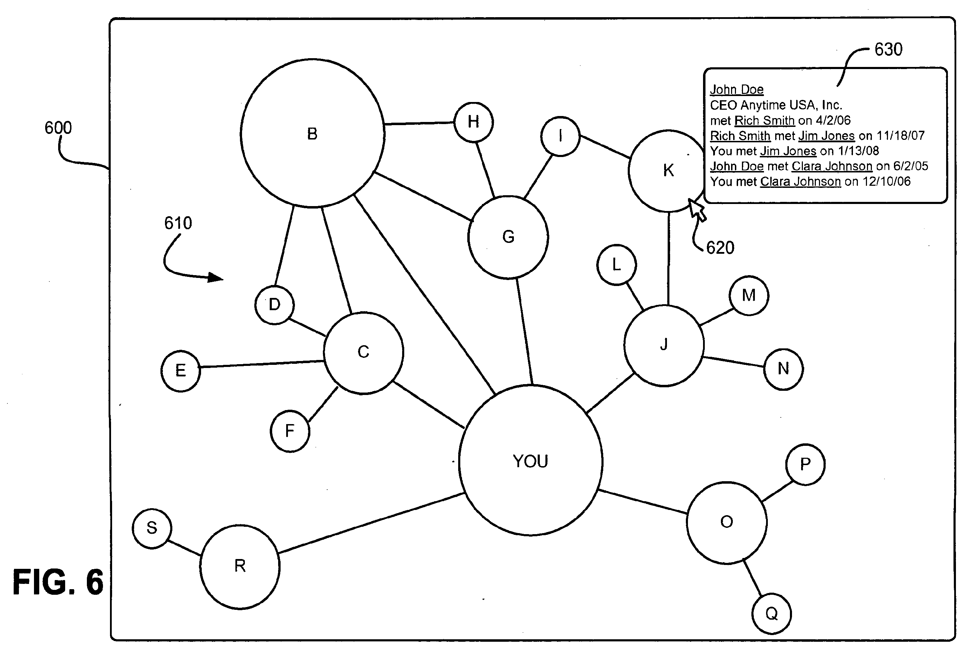

In one implementation consistent with aspects described herein, information corresponding to individuals physically met may be shared as part of a social network based on physical meetings or connections. Fig. 6 is a diagram of a user interface or display illustrating a social network based on physical meetings.

As illustrated in Fig. 6, a user interface 600 may be provided as, for example, part of a web-based social networking application or a stand-alone application. User interface 600 may graphically display a network 610 depicting interconnections between various nodes A-S, with each node associated with a user of mobile terminal 110-A, where the interconnections are based on information exchanges initiated by skin domain communication networks 120. For example, a contact in a user's address book may be indicated as a physical connection based on the fact that it was received or updated following establishment of a skin domain communication network 120. Upon a subsequent synchronization between mobile terminal 110-A and a server or other backend network device, information regarding physically met contacts may be updated on social network 610.

As shown in Fig. 6, node YOU depicts a current user in network 610 and may be centrally located within user interface 600. Various branches may extend from node YOU to various other nodes, e.g., nodes B, C, G, J, O, and R. Each node directly connected to node YOU may represent a user with whom the current user has had physical contact, as represented by the receipt of contact information from a mobile terminal 110-A associated with that user and initiated by signals transmitted via a skin domain communication network 120. Upon synchronization with the social networking server or other backend network device, information relating to such meetings may be provided to the social network application or web site.

In addition to graphically displaying users with whom the current user has come into physical contact with (e.g., nodes B, C, G, J, O, and R), network 610 may also depict other users with whom those users connected to the current user have been in physical contact with. For example, the user represented by node O in network 610 has been in physical contact with other users represented by nodes P and Q.

It is envisioned that the exchange of contact or personal information in the manner described above may typically be performed only in certain social and/or business settings in which people may reasonably expect to be meeting a certain number of people with whom they would wish to exchange contact information, such as business seminars or meetings, weddings, class reunions, etc. Accordingly, knowledge regarding individuals connected to those individuals with whom a user of mobile terminal 110-A met may have value to a user wishing to extend a relationship or meet an individual by way of a common acquaintance.

In order to access information regarding users depicted in network 610, user may select a node for further information. For example, as illustrated in Fig. 6, a user may select node K using a point device represented by pointer icon 620. Selection of node K may result in interface 600 displaying a tooltip or other information window 630 including information regarding user associated with the selected node as well as information regarding how the current user is connected to the selected user. As shown in window 630, node K is associated with John Doe and is connected to the current user by two separate paths.

John Doe is connected to the current user through Rich Smith (node I) and Jim Jones (node G). John is also connected to the current user through Clara Johnson (node J). In addition to providing the listing of connection points (e.g., degrees of separation between the current user and the selected user), window 630 may also provide timeframes in which the users have met each other. In one implementation, such information may include information relating to when the users first met each other and in other implementations, the information may include information relating to when the users last met each other. In this way, common ground between a selected user and a current user may be more easily determined.

### EXAMPLE

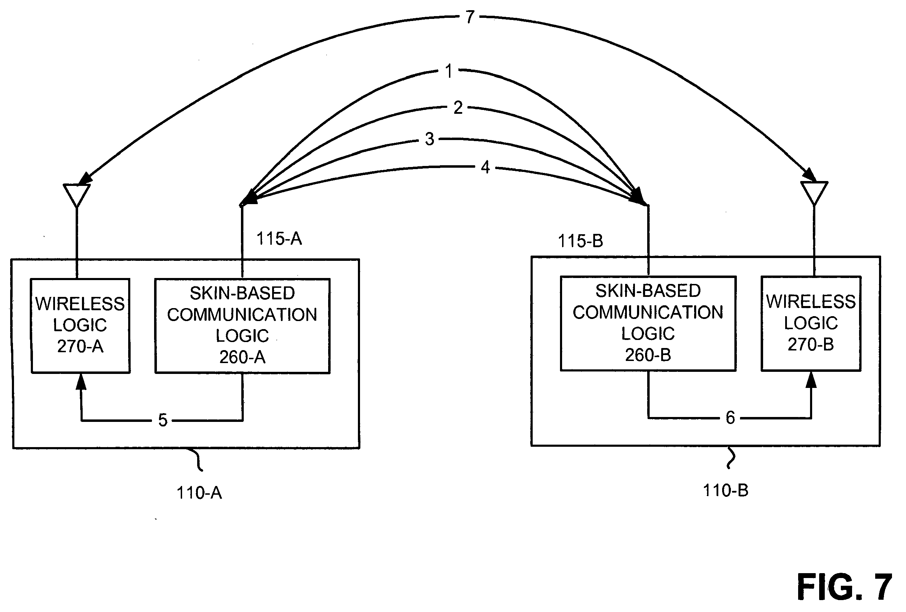

The following example illustrates the above processing. Fig. 7 is an exemplary diagram of the processing described with respect to Figs. 3 and 4. Assume, for this example, that mobile terminals 110-A and 110-B want to establish a wireless connection for the purposes of exchange information. The processing of Fig. 4 may begin with skin-based communication logic 260-A transmitting a skin domain connection request setup signal (signal 1) to mobile terminal 110-B via skin domain interface device 115-A.

Skin-based communication logic 260-B may receive the skin domain connection request setup signal via skin domain interface device 115-B and may transmit a skin domain acknowledgement signal (signal 2) to mobile terminal 110-A, via skin domain interface device 115-B. Upon receipt of the acknowledgement signal, skin-based communication logic 260-A may transmit a wireless network setup message (signal 3) to mobile terminal 110-B via skin domain interface logic 260-A. As discussed above, the wireless network setup message may include information for enabling mobile terminal 110-B to exchange information with mobile terminal 110-A via wireless logic 270-A.

Upon successful receipt of the wireless network setup message via skin domain interface device 115-B, skin-based communication logic 260-B may transmit a wireless network setup acknowledgement signal (signal 4) to mobile terminal 110-A indicating that the setup message was successfully received.

Upon receipt of the wireless network setup acknowledgement signal, skin based communication logic 260-A may transmit an activation signal to wireless logic 270-A (signal 5) to initiate creation of wireless network based on the transmitted wireless network configuration information previously transmitted to mobile terminal 110-B. For example, as described above, the activation signal may indicate pairing information and file exchange information for use in establishing and sharing data via a Bluetooth® connection. Activation signal may also activate power to wireless logic 270-A.

Similarly, following transmission of the wireless network setup acknowledgement signal to mobile terminal 110-A, skin-based communication logic 260-B may transmit a wireless network activation signal to wireless logic 270-B instructing wireless logic 270-B on how to communication wirelessly with mobile terminal 110-A and designating a type and content of information to exchange with mobile terminal 110-A (signal 6). Upon setup of a suitable wireless network based on the wireless network setup information (e.g., network 130 of Fig. 1), mobile terminal 110-A and mobile terminal 110-B may transmit data via the established connection (connection 7).

By providing for efficient and transparent exchange of information between individuals based initially on a physical contact between the individuals, the process for acquiring and sharing such information may be substantially improved

### CONCLUSION

Implementations consistent with the principles of the invention may provide an efficient method and device for automatically configuring the wireless exchange of information based on an initial skin-based contact and/or communication network.

The foregoing description of preferred embodiments of the invention provides illustration and description, but is not intended to be exhaustive or to limit the invention to the precise form disclosed. Modifications and variations are possible in light of the above teachings or may be acquired from practice of the invention.

The foregoing description of the embodiments provides illustration and description, but is not intended to be exhaustive or to limit the invention to the precise form disclosed. Modifications and variations are possible in light of the above teachings or may be acquired from practice of the invention.

For example, while the above-described embodiments primarily relate to mobile terminals, such as mobile telephones, aspects described herein may also be applicable to other technologies.

Furthermore, while a series of blocks and/or processes have been described in Figs. 3-5, the order of the blocks and/or processes may be modified in other implementations.

It will also be apparent to one of ordinary skill in the art that various embodiments, as described above, may be implemented in cellular communication devices/systems, methods, and/or computer program products. Accordingly, the present invention may be embodied in hardware and/or in software (including firmware, resident software, micro-code, etc.). Furthermore, various embodiments may take the form of a computer program product on a computer-usable or computer-readable storage medium having computer-usable or computer-readable program code embodied in the medium for use by or in connection with an instruction execution system. The actual software code or specialized control hardware used to implement aspects consistent with the embodiments described herein is not limiting of the invention. Thus, the operation and behavior of the aspects were described without reference to the specific software code--it being understood that one of ordinary skill in the art would be able to design software and control hardware to implement the aspects based on the description herein.

Further, certain portions of the invention may be implemented as "logic" that performs one or more functions. This logic may include hardware, such as a processor, microprocessor, an application specific integrated circuit or a field programmable gate array, software, or a combination of hardware and software.

It should be emphasized that the term "comprises/comprising" when used in this specification is taken to specify the presence of stated features, integers, steps, or components, but does not preclude the presence or addition of one or more other features, integers, steps, components, or groups thereof.

No element, act, or instruction used in the description of the present application should be construed as critical or essential to the invention unless explicitly described as such. Also, as used herein, the article "a" is intended to include one or more items. Where only one item is intended, the term "one" or similar language is used. Further, the phrase "based on," as used herein is intended to mean "based, at least in part, on" unless explicitly stated otherwise.

The scope of the invention is defined by the claims and their equivalents.

## Claims

1. A method performed by a first mobile terminal, the method comprising:
identifying a connection opportunity with a second mobile terminal, where the identifying comprises monitoring a parameter associated with a skin domain associated with a user of the first mobile device;
transmitting a wireless network setup message to the second mobile terminal via a skin-based communication network that includes a user of the first terminal and a user of the second terminal after detecting the connection opportunity, where the wireless network setup message is an initial contact between the first mobile terminal and the second mobile terminal;
enabling a wireless network connection based on information included in the wireless network setup message; and
receiving a data item that includes at least one of contact information, pictures, media, an encryption key, a decryption key, or profile information from the second mobile terminal via the wireless network connection, where the data item is automatically transmitted from the second mobile terminal after the wireless network is enabled.

2. The method of claim 1, where monitoring the parameter includes monitoring one of a capacitance or an inductance via the skin domain interface device.

3. The method of claim 1, where the first mobile terminal sends the wireless network setup message through a conductive tether or strap attached to the user of the first mobile terminal.

4. The method of claim 1, where the first mobile terminal sends the wireless network setup message through conductive fabric positioned between the skin domain and the first mobile device.

5. The method of claim 1, further comprising:
determining whether the received data item matches a contact stored in the first mobile terminal; and
storing a new contact including at least some of the received data in the first mobile terminal when it is determined that the received data does not match a contact stored in the first mobile terminal.

6. The method of claim 1, further comprising:
determining whether the received data item matches a contact stored in the first mobile terminal, and
updating contact information of the contact stored in the first mobile terminal based on the received data, when it is determined that the received data item matches the contact stored in the first mobile terminal.

7. The method of claim 10, where updating the contact information further comprises updating a date last met field associated with the contact.

8. The method of claim 10, further comprising:
audibly outputting a name associated with the contact when it is determined that the received data item matches a particular contact stored in the first mobile terminal.

9. The method of claim 12, where audibly outputting the name associated with the particular contact comprises audibly outputting the name via a handsfree audio device associated with the first mobile terminal.

10. A first mobile terminal comprising:
communication logic to:
detect a connection opportunity with a second mobile terminal, where the identifying comprises identifying a change in a parameter associated with a skin domain associated with a user of the first mobile device;
transmit a first wireless network setup message to a second mobile terminal via a skin domain communication network,
determine that an acknowledgement signal has not been received from the second mobile terminal via the skin domain communication network,
transmit, after the determining, a second wireless network setup message to the second mobile terminal via the skin domain communication network, where the second wireless network setup message includes different content than the first wireless network setup message, and
receive an acknowledgement message from the second mobile terminal via the skin domain communication network; and
wireless logic to:
establish a wireless connection with the second mobile terminal based on information included in the second wireless network setup message, and
automatically receive one or more data items from the second mobile terminal via the wireless connection.

11. A method comprising:
determining, by a first mobile device, that a capacitance associated with a skin domain corresponds to skin-on-skin contact, where the capacitance does not correspond to skin-to-other materials contact;
identifying a connection opportunity between the first mobile device and a second mobile device based on the determined capacitance that corresponds to skin-on-skin contact;
transmitting a wireless network setup message from the first mobile device upon identification of the connection opportunity;
activating wireless logic of the first mobile device based on information contained in the wireless network setup message;
establishing a wireless connection between the first mobile device and the second mobile device based on information contained in the wireless network setup message; and
receiving, by the first mobile device, contact information associated with a user of the second mobile terminal via the wireless connection.

## Patentansprüche

1. Ein Verfahren, ausgeführt durch ein erstes mobiles Endgerät, wobei das Verfahren umfasst:
Identifizieren einer Verbindungsmöglichkeit mit einem zweiten mobilen Endgerät, wobei das Identifizieren ein Überwachen eines Parameters umfasst, welches mit einer Haut-Domain verknüpft ist, welche mit einem Anwender der ersten Mobilvorrichtung verknüpft ist;
Übertragen einer Drahtlosnetzwerk-Set-Up-Nachricht an das zweite mobile Endgerät über ein Haut-basiertes Kommunikationsnetzwerk, welches einen Anwender des ersten Endgeräts und einen Anwender des zweiten Endgeräts umfasst, nach dem Detektieren der Verbindungsmöglichkeit, wobei die Drahtlosnetzwerk-Set-Up-Nachricht ein anfänglicher Kontakt zwischen dem ersten mobilen Endgerät und dem zweiten mobilen Endgerät ist;
Ermöglichen einer drahtlosen Netzwerkverbindung basierend auf Informationen, umfasst in der Drahtlosnetzwerk-Set-Up-Nachricht; und
Empfangen eines Datenelements, welches zumindest Kontaktinformationen und/oder Bilder und/oder Medien und/oder einen Verschlüsselungskey und/oder einen Entschlüsselungskey und/oder Profilinformationen von dem zweiten mobilen Endgerät über die drahtlose Netzwerkverbindung umfasst, wobei das Datenelement automatisch von dem zweiten mobilen Endgerät übertragen wird, nachdem das drahtlose Netzwerk ermöglicht ist.

2. Verfahren gemäß Anspruch 1, wobei das Überwachen des Parameters ein Überwachen von einer Kapazität oder einer Induktivität über die Haut-Domain-Schnittstellenvorrichtung umfasst.

3. Verfahren gemäß Anspruch 1, wobei das erste mobile Endgerät die Drahtlosnetzwerk-Set-Up-Nachricht über ein leitendes Halteelement oder einen Gurt, angebracht an dem Anwender des ersten mobilen Endgeräts, sendet.

4. Verfahren gemäß Anspruch 1, wobei das erste mobile Endgerät die Drahtlosnetzwerk-Set-Up-Nachricht über eine leitende Faser sendet, welche zwischen der Haut-Domain und der ersten mobilen Vorrichtung positioniert ist.

5. Verfahren gemäß Anspruch 1, weiter umfassend:
Bestimmen, ob das empfangene Datenelement mit einem Kontakt übereinstimmt, welcher auf dem ersten mobilen Endgerät gespeichert ist; und
Speichern eines neuen Kontakts, umfassend zumindest einige der empfangenen Daten in dem ersten mobilen Endgerät, wenn bestimmt wird, dass die empfangenen Daten nicht mit einem in dem ersten mobilen Endgerät gespeicherten Kontakt übereinstimmen.

6. Verfahren gemäß Anspruch 1, weiter umfassend:
Bestimmen, ob das empfangene Datenelement mit einem Kontakt übereinstimmt, welcher in dem ersten mobilen Endgerät gespeichert ist; und
Aktualisieren von Kontaktinformationen des Kontakts, welcher in dem ersten mobilen Endgerät gespeichert ist, basierend auf den empfangenen Daten, wenn bestimmt wird, dass das empfangene Datenelement mit dem in dem ersten mobilen Endgerät gespeicherten Kontakt übereinstimmt.

7. Verfahren gemäß Anspruch 10, wobei das Aktualisieren der Kontaktinformationen weiter ein Aktualisieren eines Feldes eines Datums des letzten Treffens, welches mit dem Kontakt verknüpft ist, umfasst.

8. Verfahren gemäß Anspruch 10, weiter umfassend:
hörbares Ausgeben eines Namens, verknüpft mit dem Kontakt, wenn bestimmt wird, dass die empfangenen Daten mit einem bestimmten Kontakt übereinstimmen, welcher in dem ersten mobilen Endgerät gespeichert ist.

9. Verfahren gemäß Anspruch 12, wobei das hörbare Ausgeben des Namens, welcher mit dem bestimmten Kontakt verknüpft ist, ein hörbares Ausgeben des Namens über eine Freisprechaudiovorrichtung umfasst, welche mit dem ersten mobilen Endgerät verknüpft ist.

10. Ein erstes mobiles Endgerät, umfassend:
eine Kommunikationslogik zum:
Detektieren einer Verbindungmöglichkeit mit einem zweiten mobilen Endgerät, wobei das Identifizieren ein Identifizieren einer Änderung in einem Parameter umfasst, welcher mit einer Haut-Domain verknüpft ist, welche mit einem Anwender der ersten mobilen Vorrichtung verknüpft ist;
Übertragen einer ersten Drahtlosnetzwerk-Set-Up-Nachricht an ein zweites mobiles Endgerät über ein Haut-Domain-Kommunikationsnetzwerk,
Bestimmen, dass ein Bestätigungssignal nicht von dem zweiten mobilen Endgerät über das Haut-Domain-Kommunikationsnetzwerk empfangen wurde,
Übertragen, nach dem Bestimmen, einer zweiten Drahtlosnetzwerk-Set-Up-Nachricht an das zweite mobile Endgerät über das Haut-Domain-Kommunikationsnetzwerk, wobei die zweite Drahtlosnetzwerk-Set-Up-Nachricht einen unterschiedlichen Inhalt zu der ersten Drahtlosnetzwerk-Set-Up-Nachricht umfasst, und
Empfangen einer Bestätigungsnachricht von dem zweiten mobilen Endgerät über das Haut-Domain-Kommunikationsnetzwerk; und
eine drahtlose Logik zum:
Einrichten einer drahtlosen Verbindung mit dem zweiten mobilen Endgerät basierend auf Informationen, umfasst in der zweiten Drahtlosnetzwerk-Set-Up-Nachricht, und
ein automatisches Empfangen von einem oder mehreren Datenelementen von dem zweiten mobilen Endgerät über die drahtlose Verbindung.

11. Ein Verfahren, umfassend:
Bestimmen, durch eine erste mobile Vorrichtung, dass eine Kapazität, verknüpft mit einer Haut-Domain, zu einem Haut-zu-Haut-Kontakt korrespondiert, wobei die Kapazität nicht zu einem Haut-zu-anderen-Materialien-Kontakt korrespondiert;
Identifizieren einer Verbindungsmöglichkeit zwischen der ersten mobilen Vorrichtung und einer zweiten mobilen Vorrichtung basierend auf der bestimmten Kapazität, welche zu einem Haut-auf-Haut-Kontakt korrespondiert;
Übertragen einer Drahtlosnetzwerk-Set-Up-Nachricht von der ersten mobilen Vorrichtung auf eine Identifikation der Verbindungsmöglichkeit;
Aktivieren einer drahtlosen Logik der ersten mobilen Vorrichtung basierend auf Informationen, enthalten in der Drahtlosnetzwerk-Set-Up-Nachricht;
Einrichten einer drahtlosen Verbindung zwischen der ersten mobilen Vorrichtung und der zweiten mobilen Vorrichtung basierend auf Informationen, enthalten in der Drahtlosnetzwerk-Set-Up-Nachricht; und
Empfangen, durch die erste mobile Vorrichtung, von Kontaktinformationen, verknüpft mit einem Anwender des zweiten mobilen Endgeräts über die drahtlose Verbindung.

## Revendications

1. Procédé réalisé par un premier terminal mobile, le procédé comprenant le fait :
d'identifier une possibilité de connexion à un deuxième terminal mobile, où l'identification comprend le fait de surveiller un paramètre associé à un domaine de peau associé à un utilisateur du premier dispositif mobile ;
de transmettre un message de configuration de réseau sans fil au deuxième terminal mobile via un réseau de communication basé sur la peau qui comporte un utilisateur du premier terminal et un utilisateur du deuxième terminal après la détection de la possibilité de connexion, où le message de configuration de réseau sans fil est un contact initial entre le premier terminal mobile et le deuxième terminal mobile ;
de permettre une connexion de réseau sans fil sur la base d'informations incluses dans le message de configuration de réseau sans fil ; et
de recevoir un élément de données qui comporte au moins un élément parmi des informations de contact, des images, des supports, une clé de chiffrement, une clé de déchiffrement et des informations de profil à partir du deuxième terminal mobile via la connexion de réseau sans fil, où l'élément de données est transmis automatiquement à partir du deuxième mobile terminal après l'activation du réseau sans fil.

2. Procédé de la revendication 1, où la surveillance du paramètre comporte le fait de surveiller l'une parmi une capacité et une inductance via un dispositif d'interface de domaine de peau.

3. Procédé de la revendication 1, où le premier terminal mobile envoie le message de configuration de réseau sans fil à travers une lanière ou une bande conductrice attachée à l'utilisateur du premier terminal mobile.

4. Procédé de la revendication 1, où le premier terminal mobile envoie le message de configuration de réseau sans fil à travers un tissu conducteur positionné entre le domaine de peau et le premier dispositif mobile.

5. Procédé de la revendication 1, comprenant en outre le fait :
de déterminer si l'élément de données reçu correspond à un contact stocké dans le premier terminal mobile ; et
de stocker un nouveau contact comportant au moins une partie des données reçues dans le premier terminal mobile lorsqu'il est déterminé que les données reçues ne correspondent pas à un contact stocké dans le premier terminal mobile.

6. Procédé de la revendication 1, comprenant en outre le fait :
de déterminer si l'élément de données reçu correspond à un contact stocké dans le premier terminal mobile ; et
de mettre à jour des informations de contact du contact stocké dans le premier terminal mobile sur la base des données reçues, lorsqu'il est déterminé que l'élément de données reçu correspond au contact stocké dans le premier terminal mobile.

7. Procédé de la revendication 10, où la mise à jour des informations de contact comprend en outre le fait de mettre à jour un champ de date de la dernière rencontre associé au contact.

8. Procédé de la revendication 10, comprenant en outre le fait :
de délivrer en sortie de manière audible un nom associé au contact lorsqu'il est déterminé que l'élément de données reçu correspond à un contact particulier stocké dans le premier terminal mobile.

9. Procédé de la revendication 12, où la sortie audible du nom associé au contact particulier comprend le fait de délivrer en sortie de manière audible le nom via un dispositif audio mains libres associé au premier terminal mobile.

10. Premier terminal mobile comprenant :
une logique de communication :
pour détecter une possibilité de connexion à un deuxième terminal mobile, où l'identification comprend le fait d'identifier un changement d'un paramètre associé à un domaine de peau associé à un utilisateur du premier dispositif mobile ;
pour transmettre un premier message de configuration de réseau sans fil à un deuxième terminal mobile via un réseau de communication de domaine de peau,
pour déterminer qu'un signal d'accusé de réception n'a pas été reçu depuis le deuxième terminal mobile via le réseau de communication de domaine de peau,
pour transmettre, après la détermination, un deuxième message de configuration de réseau sans fil au deuxième terminal mobile via le réseau de communication de domaine de peau, où le deuxième message de configuration de réseau sans fil comporte un contenu différent de celui du premier message de configuration de réseau sans fil, et
pour recevoir un message d'accusé de réception depuis le deuxième terminal mobile via le réseau de communication de domaine de peau ; et
une logique sans fil :
pour établir une connexion sans fil avec le deuxième terminal mobile sur la base d'informations incluses dans le deuxième message de configuration de réseau sans fil, et
pour recevoir automatiquement un ou plusieurs élément(s) de données depuis le deuxième terminal mobile via la connexion sans fil.

11. Procédé comprenant le fait :
de déterminer, par un premier dispositif mobile, qu'une capacité associée à un domaine de peau correspond à un contact peau à peau, où la capacité ne correspond pas à un contact peau à autres matériaux ;
d'identifier une possibilité de connexion entre le premier dispositif mobile et un deuxième dispositif mobile sur la base de la capacité déterminée qui correspond à un contact peau à peau ;
de transmettre un message de configuration de réseau sans fil à partir du premier dispositif mobile lors de l'identification de la possibilité de connexion ;
d'activer la logique sans fil du premier dispositif mobile sur la base d'informations présentes dans le message de configuration de réseau sans fil ;
d'établir une connexion sans fil entre le premier dispositif mobile et le deuxième dispositif mobile sur la base d'informations présentes dans le message de configuration de réseau sans fil ; et
de recevoir, par le premier dispositif mobile, des informations de contact associées à un utilisateur du deuxième terminal mobile via la connexion sans fil.
